# EUROPÄISCHE PATENTSCHRIFT

(11) **EP 3 362 215 B1**
(45) Veröffentlichungstag und Bekanntmachung des Hinweises auf die Patenterteilung: **26.02.2020**
(21) Anmeldenummer: 17725928.0
(22) Anmeldetag: 18.05.2017
(51) Int. Cl.: B23B 31/20, B23B 31/26, B23B 31/28

(54) **SPANNEINRICHTUNG**
CLAMPING DEVICE
DISPOSITIF DE SERRAGE

(30) Priorität: 15.06.2016 DE 102016110973
(43) Veröffentlichungstag der Anmeldung: 22.08.2018
(73) Patentinhaber: Cytec Zylindertechnik GmbH, 52428 Jülich (DE)
(72) Erfinder: WEUTHEN, Stephan, 41068 Mönchengladbach (DE)
(74) Vertreter: Andrejewski - Honke Patent- und Rechtsanwälte Partnerschaft mbB
(86) Internationale Anmeldenummer: PCT/EP2017/062030
(87) Internationale Veröffentlichungsnummer: WO 2017/215881

(56) Entgegenhaltungen:
- WO-A1-03/049898
- DE-A1- 10 101 095
- DE-A1- 19 548 711
- DE-A1-102014 111 039
- DE-C- 850 835
- DE-U1-202014 104 118
- US-A- 2 261 380

## Beschreibung

Die vorliegende Erfindung betrifft eine Spanneinrichtung zur Aufnahme und Fixierung von Werkzeugen oder Werkzeugträgern mit einer Spannzangenanordnung, einem an die Spannzangenanordnung angeschlossenen, in einer axialen Richtung verschiebbaren Zugbolzen, und einer über radial verschiebbare Sperrsegmente auf den Zugbolzen einwirkenden, in axialer Richtung beweglichen Schieberhülse.

Die Sperrsegmente hinterfassen hierbei an einer Kegelfläche einen Kopf des Zugbolzens umfangsseitig derart, dass eine in der Richtung des Zugbolzens ausgeführte, vorwärts gerichtete Bewegung der Schieberhülse eine entgegengesetzte, rückwärts gerichtete Bewegung des entlang der axialen Richtung verschiebbaren Zugbolzens bewirkt, wobei die Spannzangenanordnung derart ausgeführt und an den Zugbolzen angeschlossen ist, dass die rückwärts gerichtete Bewegung des Zugbolzens eine radial nach innen gerichtete Spannbewegung der Spannzangenanordnung bewirkt. Die Verspannung des Werkzeuges bzw. des Werkzeugträgers erfolgt somit durch eine kinematische Bewegung mehrerer gegeneinander wirkenden Komponenten. Eine axial vorwärts gerichtete Bewegung meint in diesem Zusammenhang eine Bewegung, die in Richtung des zu verspannenden Werkzeuges bzw. Werkzeugträgers ausgeführt wird.

Moderne Fertigungssysteme wie beispielsweise Dreh- oder Fräsmaschinen werden heutzutage in einer modularen Bauweise konzipiert und konstruiert. Diese modulare Bauweise ermöglicht es, dass während eines Bearbeitungsprozesses einzelne Werkzeuge bzw. Werkzeugträger ausgetauscht werden können und hierdurch eine möglichst vollständige Bearbeitung eines Werkstückes in nur einer einzigen Maschine ermöglicht wird. Der wesentliche Vorteil gegenüber klassischen Fertigungssystemen besteht darin, dass ein Umspannen der Werkstücke zwischen den einzelnen Bearbeitungsschritten auf unterschiedliche Maschinen entfällt. Diese ist insbesondere im Hinblick auf den Bau von Produkten in einer geringen Stückzahl aber dafür mit einer kompliziert ausgestalteten Geometrie äußerst praktikabel und zeitsparend. Die Zeitersparnis in Folge der fehlenden Umspannzeiten lässt sich allerdings nur dann gewinnbringend erzielen, wenn die benötigte Rüstzeit, die für den Wechsel der Werkzeuge oder Werkzeugträger benötigt wird, so gering wie möglich gehalten wird. Dies setzt neben einem schnellen Wechsel auch ein schnelles Verspannen und Fixieren der Werkzeuge in der Werkzeugmaschine voraus. Hierzu weisen die Werkzeugmaschinen eine entsprechende Spanneinrichtung auf, wobei sich als Antriebsmittel zur Ausführung der Spannbewegung im Laufe der Zeit unterschiedliche Konzepte herausgebildet haben.

So ist beispielsweise aus der DE 296 03 602 U1 eine Spannvorrichtung bekannt, bei der ein Werkzeugträger mit einem Hohlschaft in die Spanneinrichtung eingeführt und mittels eines Zugbolzens verspannt wird. Die Bewegung des Zugbolzens wird über eine kinematische Anordnung hervorgerufen, wobei der Antrieb mit einer verdrehbaren Exzenterwelle erfolgt. Durch Drehen der Exzenterwelle wird der Zugbolzen in Bewegung versetzt und führt im Zuge dessen zu einer Fixierung des Werkzeugträgers in der Spanneinrichtung. Durch eine entgegengesetzte Drehbewegung der Exzenterwelle kann der Werkzeugträger gelöst und anschließend entnommen werden.

Aus der DE 195 48 711 A1 ist eine Spanneinrichtung mit den Merkmalen des Oberbegriffs des unabhängigen Anspruchs 1 bekannt, bei der ein Werkzeugträger mittels eines Zugbolzens verspannt wird. Die Spannbewegung wird über eine pneumatische oder eine hydraulische Antriebsvorrichtung hervorgerufen. Hierdurch lässt sich auf vorteilhafter Weise die zum Spannen bzw. zum Lösen benötigte Zeit erheblich reduzieren. Allerdings muss eine pneumatische oder hydraulische Einrichtung vorgesehen werden, über die der Antrieb der Spanneinrichtung erfolgt.

Vor diesem Hintergrund liegt der vorliegenden Erfindung die Aufgabe zugrunde eine alternative Spanneinrichtung anzugeben, die ein einfaches und schnelles Verspannen ermöglicht.

Zur Lösung der Aufgabe lehrt die Erfindung eine Spanneinrichtung gemäß Anspruch 1.

Die Erfindung geht dabei von der Erkenntnis aus, dass ein Verspannen des Werkzeuges in einer schnellen Art und Weise vorgenommen werden kann, wenn der Antrieb der Schieberhülse über eine elektrische Antriebsvorrichtung realisiert wird. Da elektrischer Strom in nahezu allen Gebäuden und Fertigungshallen zur Verfügung steht, kann auf bestehende Ressourcen zurückgegriffen werden, ohne dass zusätzliche pneumatische oder hydraulische Versorgungseinrichtungen vorgesehen werden müssen.

Mit Hilfe eines Elektromotors, insbesondere eines Stellmotors, wird eine Spindel in Rotation versetzt, die in eine entsprechende mit der Schieberhülse verbundene Spindelaufnahme eingreift, wodurch die Schieberhülse in axialer Richtung entweder in eine vorwärts- oder eine rückwärts gerichtete Bewegung versetzt werden kann. Insbesondere der Ausgestaltung der Spindel kommt in diesem Zusammenhang eine besondere Bedeutung zu. Bei einer Spindel mit nur wenigen Gewindegängen dafür aber mit einer großen Gewindesteigung lassen sich grundsätzlich hohe Verstellgeschwindigkeiten erreichen und sich folglich die Zeit zum Verspannen des Werkzeuges bzw. des Werkzeugträgers erheblich reduzieren. Auf der anderen Seite wird die Spindel bei einer derartigen Ausgestaltung einem hohen Drehmoment sowie einer hohen Zugbelastung ausgesetzt, was zu einem zügigen Bauteilversagen führen kann. Bei der Auslegung und Konstruktion eines solchen Antriebes ist daher die Ausgestaltung der Spindelwelle im Hinblick auf die auftretende Belastungen und eine zügige Spannbewegung in Bezug auf die Gewindesteigung und die Anzahl der Gewindegänge entsprechend zu gestalten.

Die Spindelaufnahme ist als separates Bauteil ausgeführt und fest mit der Schieberhülse verbunden. Es liegt aber auch im Rahmen der Erfindung, die Spindelaufnahme und die Schieberhülse als zusammenhängendes Bauteil zu fertigen.

In der bevorzugten Ausgestaltung der Erfindung ist die Spindelaufnahme als Kugelgewindemutter ausgeführt. Die Spindelwelle und die Kugelgewindemutter bilden hierbei ein sogenanntes Kugelgewinde. Die Kugelgewindemutter, auch Spindelmutter genannt, besteht aus einem Mutterkörper mit eingearbeiteten Kugelumläufen, einem Kugelrückführkanal und einer Rückführhülse. Die Mutter der Kugelgewindemutter kann einen Flansch aufweisen, über den die Kugelgewindemutter auf der Schieberhülse befestigt z. B. verschraubt wird. Die umlaufenden Kugeln berühren vorzugsweise beide Flanken der Spindelwelle und fahren bei einer Rotation der Spindelwelle die einzelnen Gewindegänge nach. Über den Rückführkanal der Kugelgewindemutter können die Kugeln am Ende ihres Durchlaufes zurückbefördert werden und somit erneut in der Kugelgewindemutter zirkulieren. Ein derartiges Kugelgewinde bietet den Vorteil, dass durch die Punktanlage der Kugeln die benötigte Antriebsleistung gering gehalten werden kann und auch die einzelnen Laufbahnen nur einen geringen Materialverschleiß unterliegen. Zudem werden hohe Verfahrgeschwindigkeiten erzielt, die zu einer hohen Spanngeschwindigkeit führen. Als Materialien für die Kugelgewindemutter kommen vorzugsweise Edelstahl oder auch Kunststoff in Betracht.

Bevorzugt ist die elektrische Antriebsvorrichtung über eine Ausgleichskupplung mit der Spindelwelle verbunden. Die Ausgleichskupplung erfüllt in diesem Zusammenhang zwei Aufgaben. Zum einen können sämtliche für die Spannbewegung erforderlichen Komponenten mit Ausnahme des Elektromotors in einem Gehäuse angeordnet werden. Das Gehäuse ist in diesem Zusammenhang entweder einteilig oder auch mehrteilig aus mehreren Gehäusekomponenten bestehend aufgebaut. Der Elektromotor kann anschließend an das Gehäuse angeflanscht und die Antriebswelle über die Ausgleichskupplung mit der Spindelwelle verbunden werden. Hierdurch lässt sich die Montage der Spanneinrichtung erheblich vereinfachen und auch ein nachträglicher Austausch des Elektromotors, beispielsweise im Zuge einer Reparatur, ist jederzeit möglich. Als weiterer Vorteil ergibt sich aber, dass auch die Spindelwelle ausgetauscht werden kann, ohne dass auch gleichzeitig der Elektromotor von dieser Maßnahme betroffen ist. Durch die starke Belastung der Spindelwelle in Folge der auftretenden Dreh- und Biegemomente aber auch durch den Verschleiß im Zuge des Eingreifens in die Spindelaufnahme, stellt die Spindelwelle ein Verschleißteil dar, das somit des öfteren ausgetauscht werden muss.

Ein weiterer Vorteil der Ausgleichskupplung ist darin begründet, dass mit Hilfe der Ausgleichskupplung die auf die Spindelwelle auftretenden dynamischen Belastungen gedämpft und ausgeglichen werden können. Das betrifft insbesondere die großen Dreh- bzw. Torsionsmomente, die beim Einsetzen der Rotationsbewegung des Elektromotors auf die Spindelwelle einwirken. Mit Hilfe der Ausgleichskupplung werden die Torsionsmomente gedämpft auf die Spindelwelle übertragen und dabei Spitzen des Torsionsmomentes reduziert.

Dadurch kann die Lebensdauer der Spindelwelle erhöht werden, wodurch auch die Funktion der Spanneinrichtung über einen längeren Zeitraum gewährleistet werden kann.

Als Ausgleichskupplung kommt bevorzugt eine Elastomerkupplung in Betracht. Derartige Kupplungen weisen einen antriebs- und einen abtriebsseitigen Abschnitt auf, die wiederum in Richtung der Rotationsachse vorspringende Zähne aufweisen. Über diese Zähne erfolgt die Übertragung der Rotationsbewegung von dem antriebsseitigen auf den abtriebsseitigen Abschnitt. Zwischen den beiden Abschnitten ist eine elastomere Einheit insbesondere in Form eines aus elastomeren Material gefertigten Zahnkranzes angeordnet, der somit dämpfende Eigenschaften aufweist. Als elastomeres Material kommen insbesondere Polyurethane mit Shore-Härten zwischen 92 Shore A und 64 Shore D in Betracht.

Alternativ lässt sich die Ausgleichskupplung auch in Form einer sogenannten Schlitzkupplung realisieren. Eine derartige Kupplung ist beispielsweise aus der DE 10 2011 115 095 A1 bekannt. Die Ausgleichskupplung weist einen hülsenförmigen Grundkörper auf, welcher mehrere um den Umfang sowie entlang der Längsrichtung verteilte Querschlitze aufweist. Die Querschlitze erstrecken sich jeweils in radialer Richtung von der Außenfläche zu der Innenfläche des hülsenförmigen Grundkörpers. Die Querschlitze sind mit einem elastomeren Material ausgefüllt, wodurch sich eine ähnliche dämpfende Wirkung einstellt wie bei einer Elastomerkupplung.

In einer bevorzugten Weiterbildung der Erfindung weisen die Spannzangen eine Abwinklung auf, die in eine umfangsseitige Nut des Zugbolzens eingreifen. Hierdurch lässt sich die axiale Bewegung des Zugbolzens auf die Spannzangen übertragen. Die Tiefe der umfangsseitige Nut und auch dementsprechend die Länge der Abwinklung sind derart bemessen, dass die maximal zum Verspannen benötigte radiale Verschiebung der Spannzangen gewährleistet wird.

Bevorzugt ist die Spindelwelle über eine Lageranordnung axial und radial in dem Gehäuse gelagert. Die Lagerung ist vorzugsweise in der Nähe der Ausgleichskupplung angeordnet. Durch die axiale Lagerung wird sichergestellt, dass die Spindelwelle lediglich eine Rotationsbewegung vollzieht und folglich die axiale Bewegung ausschließlich von der Schieberhülse und der daran angeordneten Spindelaufnahme erfolgt. Hierdurch wird insbesondere die auf die Ausgleichskupplung einwirkende axiale Last deutlich verringert und das Risiko eines Loslösens der Spindelwelle aus der Kupplung reduziert.

Durch eine vorzugsweise Anordnung der Lageranordnung zwischen der Ausgleichskupplung und der Spindelaufnahme wird durch die radiale Lagerung zudem das Auftreten von Schwingungen erheblich reduziert. Die Lageranordnung stellt in diesem Zusammenhang einen Fixpunkt dar, der die für das Auftreten von Schwingungen wirksame Länge maßgeblich verringert und folglich zu einer Reduzierung der Schwingungsamplitude führt.

In einer bevorzugten Weiterbildung der Erfindung ist die Spindelanordnung als Wälzlager ausgeführt. Insbesondere in Form eines Kugellagers können mit nur einem einzigen Lager sowohl radiale als auch axiale Kräfte aufgenommen werden. Es liegt aber auch im Rahmen der Erfindung, mehrere Lager nebeneinander anzuordnen. Bei einer zweiteiligen Ausführung ist beispielsweise das erste Lager ein Axiallager und das zweite Lager ein Radiallager. Grundsätzlich können aber auch sowohl mit dem ersten als auch mit dem zweiten Lager axiale und radiale Kräfte aufgenommen werden.

Bevorzugt ist eine Positionierung der Schieberhülse über ein oder mehrere Sensoren bestimmbar. Als Sensoren eignen sich insbesondere Näherungsschalter. Bei der Verwendung von Näherungsschaltern werden vorzugsweise zwei Näherungsschalter so angeordnet, dass die Positionierung der Schieberhülse sowohl im vollständig entspannten als auch im vollständig verspannten Zustand erfasst werden kann. Mit Hilfe der von den Näherungssensoren ausgegebenen Signale kann der Elektromotor beispielsweise abgeschaltet werden, sobald eine der beiden Endlagen - vollständig gespannt und vollständig gelöst - erreicht ist.

In einer bevorzugten Ausgestaltung der Erfindung ist zwischen der Schieberhülse und dem Zugbolzen ein Innenfederelement angeordnet, das vorzugsweise als Spiralfeder ausgeführt ist. Mit Hilfe dieses Innenfederelementes wird sichergestellt, dass bei einem Übergang von einem verspannten in einen gelösten Zustand das eingespannte Werkzeug bzw. der eingespannte Werkzeugträger vollständig gelöst wird und entsprechend entnommen werden kann.

Die Erfindung geht hierbei von der Überlegung aus, dass bei einer rückwärts gerichteten Bewegung der Schieberhülse die radial nach innen geschobenen Sperrelemente zwar freigegeben werden, eine vollständige Verschiebung der Sperrelemente radial nach außen allerdings nicht sichergestellt werden kann. In Folge dessen ließe sich der Zugbolzen nicht weit genug axial verschieben, so dass auch die Spannzangen keine vollständig radial nach außen gerichtete Bewegung vollziehen würden. Durch die Anordnung des Innenfederelementes zwischen der Schieberhülse und dem Zugbolzen wird ein Druck auf den Zugbolzen ausgeübt, der auch nach Lösen der Schieberhülse weiterhin Bestand hat. Der Zugbolzen drückt mit seiner Kegelfläche gegen die Sperrelemente, die sich im Zuge dessen radial nach außen bewegen. Der Zugbolzen führt eine in axialer Richtung vorwärts gerichtete Bewegung aus und führt dazu, dass die Spannzangen radial nach außen gleiten.

In einer Weiterbildung der Erfindung ist zudem zwischen der Schieberhülse und einem Gehäuseabschnitt ein Außenfederelement angeordnet. Mit Hilfe des Außenfederelementes wird sichergestellt, dass auch in einem elektrisch spannungsfreien Zustand, beispielsweise im Zuge eines Stromausfalls, das verspannte Werkzeug bzw. der verspannte Werkzeugträger nicht gelöst werden kann. Durch das Innendruckfederelement besteht zwischen dem Zugbolzen und der Schieberhülse ein kontinuierlicher Druck. In einem elektrisch spannungsfreien Zustand kann dieser Druck dazu führen, dass die Schieberhülse eine axial rückwärts gerichtete Bewegung ausführt und folglich die Sperrsegmente frei gibt. Durch die gleichzeitig axial vorwärts gerichtete Bewegung des Zugbolzens führen auch die Spannzangen eine radial nach außen gerichtete Bewegung aus, so dass die Spanneinrichtung insgesamt einen gelösten Zustand erreicht.

Mit Hilfe des Außendruckfederelementes wird eine dem Innendruckfederelement entgegen gerichtete Kraft auf die Schieberhülse ausgeübt, so dass auch in einem elektrisch spannungsfreien Zustand eine Bewegung der Schieberhülse nicht möglich ist.

Im Folgenden wird die Erfindung anhand einer lediglich ein Ausführungsbeispiel zeigenden Zeichnung erläutert.

Es zeigen:
Fig. 1 Einen Querschnitt durch die Spanneinrichtung im gelösten Zustand.
Fig. 2 Einen Querschnitt durch die Spanneinrichtung im verspannten Zustand.

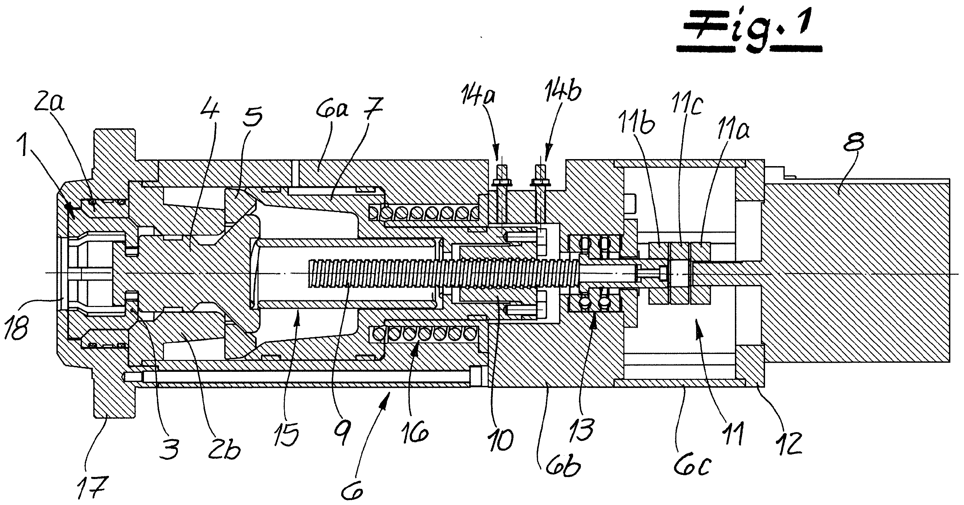

Figur 1 zeigt eine erfindungsgemäße Spanneinrichtung im gelösten Zustand. Die Spanneinrichtung verfügt über eine Spannzangenanordnung 1, die in Form mehrerer in Umfangsrichtung nebeneinander angeordneter Spannzangen realisiert ist. Die Spannzangen weisen einen kegelförmigen Fuß auf, wobei die innenliegende Kegelfläche der Fixierung des Werkzeuges bzw. des Werkzeugträgers dient und die außenliegende Kegelfläche gegen die Kegelfläche eines ersten Führungselementes 2a schiebbeweglich geführt ist, so dass im Zuge einer axialen Verschiebung der Spannzangenanordnung 1 auch gleichzeitig eine radiale Verschiebung derselben einsetzt. Die Spannzangen 1 weisen ferner an ihrem Kopf eine rechtwinklige Abwinklung 3 auf, wobei die Außenfläche der Abwinklung 3 ebenfalls in Form einer Kegelfläche ausgeführt ist, die gegen ein zweites Führungselement 2b schiebbeweglich gelagert ist. Im Sinne einer klemmfreieren Verschiebung der Spannzangen 1 sind die beiden kegelförmigen Kontaktflächen zwischen den Führungszangen 1 und dem jeweiligen Führungselement 2a, 2b parallel zueinander ausgerichtet.

Die Führungszangen 1 greifen mit ihrer rechtwinkligen Abwinklung 3 in eine umfangsseitige Nut eines Zugbolzens 4, die am Fuß des Zugbolzens 4 eingebracht ist und eine Nuttiefe aufweist, die derart bemessen ist, dass diese zumindest der Länge der rechtwinkligen Abwinklung 3 entspricht. Im gelösten Zustand greift die rechtwinklige Abwinklung 3 dabei nicht vollständig in die umfangsseitige Nut des Zugbolzens 4 ein.

Der Zugbolzen 4 ist axial schiebbeweglich in dem zweiten Führungselement 2b gelagert und weist einen Kopf in Form eines Kegelstumpfes auf, wobei die kegelförmige Mantelfläche des Kopfes gegen eine entsprechend kegelförmig ausgebildete Kontaktfläche von Sperrsegmenten 5 angelegt ist. Die Sperrsegmente 5 liegen auf dem zweiten Führungselement 2b auf, so dass eine axiale Verschiebung der Sperrsegmente 5 in Richtung der Spannzangen 1 vermieden wird. Durch die kegelförmige Kontaktfläche zwischen dem Zugbolzen 4 und den einzelnen Sperrsegmenten 5 bewirkt eine in axialer Richtung vorwärts gerichtete Verschiebung des Zugbolzens 4, dass die Sperrsegmente 5 radial nach außen gleiten. In dem dargestellten gelösten Zustand liegen die Sperrsegmente 5 in radialer Richtung an einem ersten Gehäuseabschnitt 6a eines mehrteiligen Gehäuses an.

Die Sperrsegmente 5 weisen ferner eine weitere Kegelfläche auf, die an einem radial außenliegenden Abschnitt der Sperrsegmente 5 angeordnet ist und über die die Sperrsegmente 5 vom Fuß einer Schieberhülse 7 hinterfasst werden. Die Schieberhülse 7 ist axial verschiebbar in dem Gehäuseabschnitt 6a angeordnet und bewirkt in Folge einer axial vorwärts gerichteten Bewegung ein radial nach innen gerichtetes Gleiten der Sperrsegmente 5. Im gelösten Zustand liegen daher die Kegelflächen der Sperrsegmente 5 und des Fußes der Schieberhülse 7 direkt aneinander an.

Grundsätzlich wird die ganze kinematische Anordnung, die für das Ausführen der Spannbewegung verantwortlich ist, über die axial verschiebbare Schieberhülse 7 angetrieben. Hierzu bedarf es folglich einer Antriebsvorrichtung, mit der die Schieberhülse 7 selbst in Bewegung versetzt werden kann.

Die Antriebsvorrichtung besteht aus einem Elektromotor 8 und einer von dem Elektromotor 8 angetriebenen Spindelwelle 9, die in eine Spindelaufnahme 10 eingreift. Die Spindelaufnahme 10 ist in dem gezeigten Beispiel als Kugelgewindemutter ausgeführt und mit Hilfe von Verschraubungen mit der Schieberhülse verbunden.

Durch Versetzen der Spindelwelle 9 in Rotation, wird die Kugelgewindemutter in Bewegung versetzt und führt infolgedessen eine axiale Bewegung aus. Je nach Drehrichtung der Spindelwelle 9 wird die mit der Kugelgewindemutter verbundene Schieberhülse 7 entweder axial vorwärts oder axial rückwärts bewegt. Eine axial vorwärts gerichtete Bewegung führt zu einem Verspannen des entsprechenden Werkzeuges bzw. Werkzeugträgers, eine axial rückwärts gerichtete Bewegung führt im Gegensatz dazu zu einem Lösen.

Die Spindelwelle 9 und eine Antriebswelle des Elektromotors 8 sind als zwei separate Bauteile ausgeführt und mit Hilfe einer Ausgleichskupplung 11 miteinander verbunden. Durch Lösen der Ausgleichskupplung 11 erfolgt eine Trennung der Spindelwelle 9 von dem Elektromotor 8, so dass der Elektromotor 8 auf einfache Art und Weise von der Spanneinrichtung entnommen werden kann. Hierzu weist der Elektromotor 8 einen Motorflansch 12 auf, der mittels Verschraubungen mit einem dritten Gehäuseabschnitt 6c verbunden ist.

Die Ausgleichskupplung 11 ist in dem gezeigten Beispiel als Elastomerkupplung ausgeführt und weist einen antriebsseitigen Abschnitt 11a und einen abtriebsseitigen Abschnitt 11b auf. Zwischen dem antriebsseitigen Abschnitt 11a und dem abtriebsseitigen Abschnitt 11b ist eine elastomere Einheit 11c in Form eines aus einem Elastomer gebildeten Zahnkranzes angeordnet, so dass das Drehmoment des antriebsseitigen Abschnitts 11a nur durch Zwischenschaltung des Zahnkranzes 11c auf den abtriebsseitigen Abschnitt 11b übertragen werden kann. Durch den Zahnkranz 11c erfolgt eine gedämpfte Übertragung der Drehmomente wodurch Drehmomentspitzen verhindert werden. Diese Drehmomentspitzen treten insbesondere beim Einsetzen der Drehbewegung des Elektromotors 8 auf und rufen aufgrund der Trägheit der kinematischen Anordnung hohe Torsionsmomente innerhalb der Spindelwelle 9 hervor. Durch Einsetzen eines elastomeren Zahnkranzes 11c in die Elastomerkupplung 11 lassen sich diese Torsionsmomente minimieren, so dass der Einsatz der Spannvorrichtung über einen längeren Zeitraum gewährleistet werden kann, ohne dass ein Bauteilversagen der Spindelwelle 9 hervorgerufen wird.

Zur axialen und radialen Lagerung der Spindelwelle ist darüber hinaus zwischen der Kugelgewindemutter 10 und der Ausgleichskupplung 11 eine Lageranordnung 13 vorgesehen, die innerhalb eines zweiten Gehäuseabschnittes 6b angeordnet und gegenüber diesem fixiert ist. Die Lageranordnung 13 besteht in dem gezeigten Beispiel aus zwei axial hintereinander angeordneten Wälzlagern vom Typ eines Kugellagers. Mit Hilfe eines Kugellagers lassen sich mit nur einem einzigen Lagertypen sowohl radiale als auch axiale Kräfte aufnehmen.

Durch die Verwendung von zwei typgleichen Wälzlagern lassen sich insbesondere die axialen Lasten gleichmäßig auf beide Wälzlager der Lageranordnung 13 verteilen. Die Lageranordnung 13 erfüllt in diesem Zusammenhang zwei wesentliche Aufgaben. Durch die in die Kugelgewindemutter 10 eingreifende rotierende Spindelwelle 9 werden axiale Lasten hervorgerufen, die bei Fehlen einer axialabstützenden Lageranordnung 13 nicht nur einen Druck auf die Schieberhülse 7, sondern auch einen Zug auf die Motorwelle des Elektromotors 8 bzw. auf den abtriebsseitigen Abschnitt 11b der Ausgleichskupplung 11 ausübt. Diese Zugbelastung kann beispielsweise den Betrieb des Elektromotors 8 stören oder auch gegebenenfalls zu einem Lösen der Spindelwelle 9 oder der Antriebswelle des Elektromotors 8 in der Ausgleichskupplung 11 führen. Mit Hilfe einer axialen Lagerung 13 werden nahezu sämtliche axialen Lasten, die durch die Rotation der Spindelwelle 9 hervorgerufen werden, aufgenommen.

Die radiale Lagerung durch die Lageranordnung 13 dient auch der Minimierung der dynamischen Biegebelastungen. Da je nach Positionierung der Schieberhülse 7 ein relativ großer Abstand zwischen der Schieberhülse 7 und dem Elektromotor 8 besteht, können aufgrund des langen Hebelarms bereits geringfügige Querbelastungen zu einer starken dynamischen Biegebelastung der Spindelwelle bzw. des kompletten Antriebsstanges, bestehend aus Antriebswelle des Elektromotors 8, Ausgleichskupplung 11 und Spindelwelle 13, führen. Durch die Einbringung eines Fixpunktes in Form der Lageranordnung 13 zwischen der Kugelgewindemutter und dem Elektromotor 8 werden die dynamisch wirkenden Hebelarme verkürzt, wodurch auch die möglicherweise auftretenden Biegebelastungen stark reduziert werden.

Die exemplarisch gezeigte Spanneinrichtung weist zwei Endlagen auf. Eine erste Endlage entspricht dabei dem gelösten und die zweite Endlage einem verspannten Zustand. Um das Zu- und Abschalten des Elektromotors 8 und insbesondere auch dessen Drehrichtung steuern zu können, ist es erforderlich, dass der Elektromotor 8 bzw. eine Steuerung des Elektromotors 8 darüber informiert wird, in welcher der beiden Endlagen sich die Spindelwelle 9 befindet. In dem aufgezeigten Ausführungsbeispiel erfolgt dies mit Hilfe zweier Näherungsschalter 14a, 14b. Registriert sowohl der erste Näherungsschalter 14a als auch der zweite Näherungsschalter 14b ein Signal, so bedeutet das, dass sich die Schieberhülse 7 in einem vollständig gelösten Zustand befindet. Im Zuge einer einsetzenden Bewegung, wird die Schieberhülse 7 axial vorwärts bewegt, wobei der zweite Näherungsschalter 14b kein Signal mehr registriert, während der erste Näherungsschalter 14a weiterhin ein Signal an den Elektromotor 8 sendet. Für den Elektromotor 8 bedeutet das, dass sich die Schieberhülse 7 in einem Zustand zwischen gelöstem und verspanntem Zustand befindet.

Die gezeigte Spanneinrichtung weist ferner sowohl ein Innenfederelement 15 als auch ein Außenfederelement 16 auf. Das Innenfederelement 15 ist zwischen dem Zugbolzen 4 und der Schieberhülse 7 angeordnet und in Form einer Spiralfeder ausgeführt. In dem aufgezeigten gelösten Zustand ist das Innenfederelement 15 in einem nahezu belastungsfreien Zustand und wird erst im Zuge einer vorwärts gerichteten Bewegung der Schieberhülse 7 gegen den Zugbolzen 4 gedrückt, so dass sich eine Druckbelastung sowohl auf den Zugbolzen 4 als auch auf die Schieberhülse 7 ausbildet.

Das Außenfederelement 16 ist zwischen der Schieberhülse 7 und dem Gehäuseabschnitt 6a angeordnet und dient im Wesentlichen dem Ausgleich der durch das Innenfederelement 15 hervorgerufenen Druckbelastung auf die Schieberhülse 7. Auch das Außenfederelement 16 ist als Spiralfeder ausgeführt und im gelösten Zustand der Spanneinrichtung derart gestaucht, dass sich eine Druckbelastung zwischen dem Gehäuseabschnitt 6a und der Schieberhülse 7 einstellt.

Die Spanneinrichtung weist darüber das Gehäuse 6 auf, das aus mehreren Abschnitten 6a, 6b, 6c zusammengesetzt ist. Den Kopf des Gehäuses 6 ist ein Flansch 17 angeschlossen, der eine kreisförmige Öffnung 18 zur Aufnahme des Werkzeuges bzw. des Werkzeugträgers aufweist. Der dritte Gehäuseabschnitt 6c ist in Form einer umfangsseitigen Abdeckplatte ausgeführt, die sich über einen Winkelabschnitt des zweiten Gehäuseabschnittes 6b erstreckt. Dieser Winkelabschnitt liegt vorzugsweise zwischen 90° und 180° und beträgt besonders bevorzugt 120°. Durch die Entfernung des zweiten Gehäuseabschnittes 6b ist die Ausgleichskupplung 11 zugänglich, so dass eine Trennung der Spindelwelle 9 von der Antriebswelle des Elektromotors 8 erfolgen kann. Die einzelnen Gehäuseabschnitte 6a, 6b, 6c sowie der kopfseitige Flansch 17 und der Motorflansch 12 sind darüber hinaus gegeneinander fixiert, vorzugsweise verschraubt, so dass eine Zerlegung der Spanneinrichtung bzw. ein Zusammensetzen der einzelnen Komponenten auf einfache Art und Weise geschehen kann.

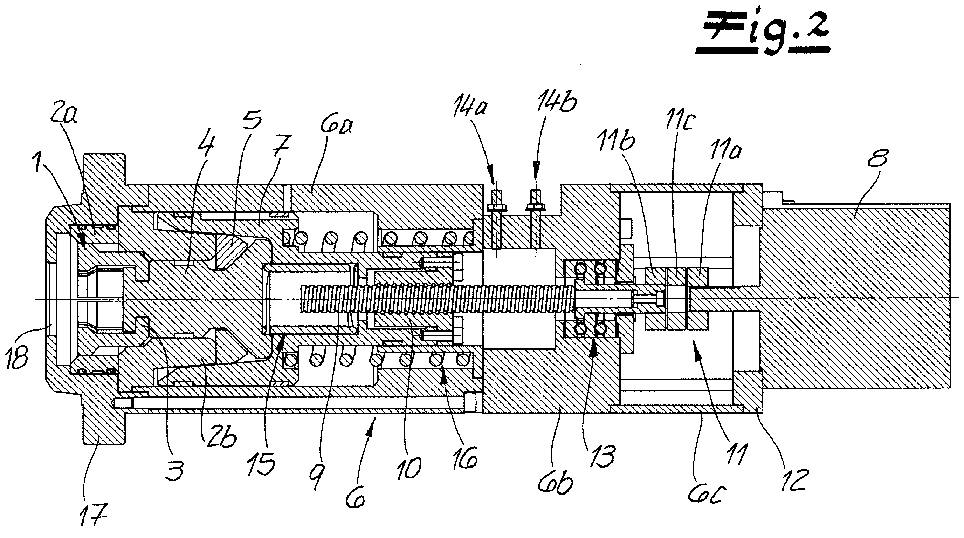

Die Figur 2 zeigt die erfindungsgemäße Spanneinrichtung in einem verspannten Zustand. Im Vergleich mit dem in Figur 1 gezeigten gelösten Zustand, sind die Spannzangen sowohl axial rückwärts gerichtet als auch radial nach innen verschoben. Die kegelförmigen Kontaktflächen sowohl zwischen der Spannzangenanordnung 1 und dem ersten Führungselement 2a als auch zwischen der Spannzangenanordnung 1 und dem zweiten Führungselement 2b liegen nicht mehr unmittelbar aneinander an, was zu einer radialen Versperrung der Spannzangen 1 führt. Die radial nach innen gerichtete Verschiebung macht sich auch dahingehend bemerkbar, dass die rechtwinklige Abwinklung 3 nahezu vollständig innerhalb der umfangsseitigen Nut am Fuß des Zugbolzens 4 angeordnet ist.

Der Zugbolzen 4 ist gegenüber dem gelösten Zustand ebenfalls axial rückwärts verschoben. Im Zuge dieser Verschiebung und der gleichzeitigen axial vorwärts gerichteten Verschiebung der Schieberhülse 7 liegen nunmehr der Zugbolzen 4 und die Schieberhülse 7 unmittelbar aneinander an. Dies hat zur Folge, dass das Innenfederelement 15 stark zusammengepresst ist und nunmehr einen starken Druck sowohl auf den Zugbolzen 4 als auch auf die Schieberhülse 7 ausübt. Demgegenüber ist das Außenfederelement 16, das zwischen der Schieberhülse 7 und dem Gehäuseabschnitt 6a angeordnet ist, stark gestreckt und übt somit eine dem Innenfederelement 15 entgegen gerichtete und betragsmäßig zumindest gleichgroße Kraft aus. Hierdurch wird sichergestellt, dass bei einem elektrisch spannungsfreien Zustand des Elektromotors 8 das Innendruckfederelement 15 den Zugbolzen 4 und die Schieberhülse 7 nicht auseinander drückt und ein ungewünschtes Lösen des Werkzeuges bzw. des Werkzeugträgers hervorruft.

Im verspannten Zustand der Spanneinrichtung registriert sowohl der erste Näherungsschalter 14a als auch der zweite Näherungsschalter 14b kein Signal mehr, da die Schieberhülse 7 axial vorwärts gerichtet verschoben wurde. Dem Elektromotor 8 wird daher kenntlich gemacht, dass die zweite Endlage bzw. die verspannte Lage erreicht worden ist und der Elektromotor 8 in einen elektrisch spannungsfreien Zustand versetzt werden kann. Für den Elektromotor 8 bedeutet dies ferner, dass bei einem erneuten Zuschalten die Drehrichtung der Antriebswelle gegenüber dem ungelösten Zustand umgedreht werden muss, was zu einer axial rückwärts gerichteten Verschiebung der Schieberhülse 7 führt.

## Patentansprüche

1. Spanneinrichtung zur Aufnahme und Fixierung von Werkzeugen oder Werkzeugträgern mit einer Spannzangenanordnung (1), einem an die Spannzangenanordnung (1) angeschlossenen, in einer axialen Richtung verschiebbaren Zugbolzen (4) und einer über radial verschiebbare Sperrsegmente (5) auf den Zugbolzen (4) einwirkenden, in axialer Richtung beweglichen Schieberhülse (7),
wobei die Sperrsegmente (5) an einer Kegelfläche einen Kopf des Zugbolzens (4) umfangsseitig derart hinterfassen, dass eine in Richtung des Zugbolzens (4) ausgeführte, vorwärts gerichtete Bewegung der Schieberhülse (7) einer entgegengesetzte, rückwärts gerichtete Bewegung des entlang der axialen Richtung verschiebbaren Zugbolzens (4) bewirkt,
wobei die Spannzangenordnung (1) derart ausgeführt und an den Zugbolzen (4) angeschlossen ist, dass die rückwärts gerichtete Bewegung des Zugbolzens (4) eine Spannbewegung der Spannzangenanordnung (1) bewirkt,
**dadurch gekennzeichnet, dass**
die Spannbewegung der Spannzangenanordnung radial nach innen gerichtet ist, und
dass eine elektrische Antriebsvorrichtung (8), insbesondere ein Elektromotor, die Schieberhülse (7) über eine Spindelwelle (9) antreibt, wobei die Spindelwelle (9) in einer mit der Schieberhülse (7) verbundenen Spindelaufnahme (10) eingreift.

2. Spanneinrichtung nach Anspruch 1, **dadurch gekennzeichnet, dass** die Spindelaufnahme (10) als Kugelgewindemutter ausgeführt ist.

3. Spanneinrichtung nach Anspruch 1 oder 2, **dadurch gekennzeichnet, dass** die elektrische Antriebsvorrichtung (8) über eine Ausgleichskupplung (11) mit der Spindelwelle (9) verbunden ist.

4. Spanneinrichtung nach einem der Ansprüche 1 bis 3, **dadurch gekennzeichnet, dass** die Spannzangen (1) eine Abwinklung (3) aufweisen, die in eine umfangsseitige Nut des Zugbolzens (4) eingreifen.

5. Spanneinrichtung nach einem der Ansprüche 1 bis 4, **dadurch gekennzeichnet, dass** die Spindelwelle (9) über eine Lageranordnung (13) axial und radial in einem Gehäuse (6) gelagert ist.

6. Spanneinrichtung nach Anspruch 5, **dadurch gekennzeichnet, dass** die Lageranordnung (13) zumindest ein Wälzlager aufweist.

7. Spanneinrichtung nach einem der Ansprüche 1 bis 6, **dadurch gekennzeichnet, dass** eine Positionierung der Schieberhülse (7) über einen Sensor (14) oder mehrere Sensoren (14), insbesondere Näherungsschalter, bestimmbar ist.

8. Spanneinrichtung nach einem der Ansprüche 1 bis 7, **dadurch gekennzeichnet, dass** ein Innenfederelement (15), insbesondere eine Spiralfeder, zwischen der Schieberhülse (7) und dem Zugbolzen (4) angeordnet ist.

9. Spanneinrichtung nach einem der Ansprüche 1 bis 8, **dadurch gekennzeichnet, dass** ein Außenfederelement (16), insbesondere eine Spiralfeder, zwischen der Schieberhülse (7) und einem Gehäuseabschnitt (6a, 6b, 6c) angeordnet ist.

## Claims

1. Clamping device for receiving and fixing tools or tool holders with a collet arrangement (1), a tension bolt (4) which is connected to the collect arrangement (1) and moveable in an axial direction, and a sliding sleeve (7) which is movable in the axial direction and via radially displaceable locking segments (5) acts on the tension bolt (4),
wherein on a conical surface the locking segments (5) circumferentially engage behind a head of the tension bolt (4) in such a way that a forwards movement of the sliding sleeve (7) carried out in the direction of the tension bolt (4) brings about a backwards movement of the tension bolt (4) displaceable along the axial direction,
wherein the collect arrangement (1) is configured and connected to the tension bolt (4) in such a way that the backwards movement of the tension bolt (4) brings about a clamping movement of the collect arrangement (1),
**characterised in that**
the clamping movement of the collet arrangement is directed radially inwards and **in that**
an electrical actuator device (8), more particularly an electric motor, actuates the sliding sleeve (7) via a spindle shaft (9), wherein the spindle shaft (9) engages in a spindle holder (10) connected to the sliding sleeve (7).

2. Clamping device according to claim 1 **characterised in that** the spindle holder (10) is designed as a ball screw nut.

3. Clamping device according to claim 1 or 2 **characterised in** the electric actuator device (8) is connected to the spindle shaft (9) via a compensating coupling (11).

4. Clamping device according to any one of claims 1 to 3 **characterised in that** the collets (1) have an angled portion (3) which engages in a circumferential groove of the tension bolt (4).

5. Clamping device according to any one of claims 1 to 4 **characterised in that** the spindle shaft (9) is axially and radially borne in a housing (6) by way of a bearing device (13).

6. Clamping device according to claim 5 **characterised in that** the bearing device (13) comprises at least one roller bearing.

7. Clamping device according to any one of claims 1 to 6 **characterised in that** a positioning of the sliding sleeve (7) can be determined by way of one sensor (14) or a plurality of sensors (14), in particular proximity switches.

8. Clamping device according to any one of claims 1 to 7 **characterised in that** an inner spring element (15), in particular a spiral spring, is arranged between the sliding sleeve (7) and the tension bolt (4).

9. Clamping device according to any one of claims 1 to 8 **characterised in that** an outer spring element (16), in particular a spiral spring, is arranged between the sliding sleeve (7) and a housing section (6a, 6b, 6c).

## Revendications

1. Système de serrage, destine à recevoir et à fixer des outils ou des porte-outils, pourvu d'un agencement de pinces de serrage (1), d'un boulon de traction (4) déplaçable dans une direction axiale, raccordé sur l'agencement de pinces de serrage (1) et d'un manchon coulissant (7), mobile en direction axiale, agissant par l'intermédiaire de segments de blocage (5) déplaçables en direction radiale sur le boulon de traction (4),
sur une surface conique, les segments de blocage (5) s'engageant par l'arrière sur la circonférence d'une tête du boulon de traction (4), de telle sorte qu'un déplacement dirigé vers l'avant du manchon coulissant (7), exercé dans la direction du boulon de traction (4) provoque un déplacement opposé, dirigé vers l'arrière du boulon de traction (4) déplaçable le long de la direction axiale, l'agencement de pinces de serrage (1) étant réalisé et raccordé sur le boulon de traction (4) de telle sorte que le déplacement dirigé vers l'arrière du boulon de traction (4) provoque un déplacement en serrage de l'agencement de pinces de serrage (1),
**caractérisé en ce que**
le déplacement en serrage de l'agencement de pinces de serrage est dirigé vers l'intérieur en direction radiale et **en ce**
**qu'**un dispositif d'entraînement électrique (8), notamment un moteur électrique entraîne le manchon coulissant (7) par l'intermédiaire d'un arbre de broche (9), l'arbre de broche (9) s'engageant dans un logement de broche (10) relié avec le manchon coulissant (7).

2. Système de serrage selon la revendication 1, **caractérisé en ce que** le logement de broche (10) est réalisé sous la forme d'un écrou à billes.

3. Système de serrage selon la revendication 1 ou 2, **caractérisé en ce que** le dispositif d'entraînement électrique (8) est relié par l'intermédiaire d'un accouplement compensateur (11) avec l'arbre de broche (9).

4. Système de serrage selon l'une quelconque des revendications 1 à 3, **caractérisé en ce que** les pinces de serrage (1) comportent un coude (3) qui s'engage dans une rainure périphérique du boulon de traction (4).

5. Système de serrage selon l'une quelconque des revendications 1 à 4, **caractérisé en ce que** l'arbre de broche (9) est logé par l'intermédiaire d'un agencement de roulements (13) en direction axiale et radiale dans un boîtier (6).

6. Système de serrage selon la revendication 5, **caractérisé en ce que** l'agencement de roulements (13) comporte au moins un roulement mécanique.

7. Système de serrage selon l'une quelconque des revendications 1 à 6, **caractérisé en ce qu'**un positionnement du manchon coulissant (7) est susceptible d'être déterminé par l'intermédiaire d'un capteur (14) ou de plusieurs capteurs (14), notamment des capteurs de proximité.

8. Système de serrage selon l'une quelconque des revendications 1 à 7, **caractérisé en ce qu'**un élément à ressort interne (15), notamment un ressort hélicoïdal est placé entre le manchon coulissant (7) et le boulon de traction (4).

9. Système de serrage selon l'une quelconque des revendications 1 à 8, **caractérisé en ce qu'**un élément à ressort externe (16), notamment un ressort hélicoïdal est placé entre le manchon coulissant (7) et une portion du boîtier (6a, 6b, 6c).
